# EUROPEAN PATENT APPLICATION

(11) **EP 2 166 448 A1**
(43) Date of publication of application: **24.03.2010**
(21) Application number: 09169689.8
(22) Date of filing: 08.09.2009
(51) Int. Cl.: G06F 9/44

(54) **Image processing apparatus, image processing method, and recording medium**

(30) Priority: 19.09.2008 JP 2008241630
(71) Applicant: Ricoh Company, Ltd., Tokyo 143-8555 (JP)
(72) Inventor: Sugishita, Satoru, Ohta-ku Tokyo 143-8555 (JP)
(74) Representative: Schwabe - Sandmair - Marx

(57) **Abstract**

An image processing apparatus includes a display unit (130) that displays an operation screen for a user to perform an input operation; a storing unit (110) that stores therein a screen element database (111) that stores therein a plurality of screen elements to be arranged on the operation screen and that is capable of storing therein a definition file that defines a display screen; an input unit (101) that receives selection of a plurality of screen elements from the screen element database and receive input of component information in which layout information that represents a layout position of a screen element, element definition information that specifies a screen element arranged at the layout position, and screen element information that represents an image of a screen element are correlated with each other, the component information corresponding to each of the screen elements; and a definition-file creating unit (102) that creates the definition file by combining a plurality of pieces of the component information received by the input unit (101) and configured to store the definition file in the storing unit (110).

## Description

### CROSS-REFERENCE TO RELATED APPLICATIONS

The present application claims priority to and incorporates by reference the entire contents of Japanese Patent Application No. 2008-241630 filed in Japan on September 19, 2008.

### BACKGROUND OF THE INVENTION

### 1. Field of the Invention

The present invention relates to an image processing apparatus, an image processing method, and a recording medium.

### 2. Description of the Related Art

In recent years, with the progress of the Internet technology, a graphical user interface (GUI) editing tool that is excellent in developing a GUI for a world wide web (Web) application are available. For example, Japanese Patent Application Laid-open No. 2006-276989 discloses a technology in which a web page displayed on a display screen of an information processing apparatus or the like is created by using a screen layout data file and an operation instruction file.

For an operation screen through which a user sets printing conditions or instructs printing in an image processing apparatus, a computer program is created for each operation screen and each operation screen is displayed by executing a corresponding computer program. Japanese Patent Application Laid-open No. 2004-265278 discloses a technology in which data to be processed in an application is taken in consideration on and an action to be performed to each data is simply defined for making creation of a computer program easily.

However, for the operation screen through which a user sets the printing conditions or instructs the printing in an image processing apparatus, a computer program is created for each operation screen and each operation screen is displayed by executing a corresponding computer program. In the case of an image processing apparatus, because an operation screen is embedded in the apparatus in advance, typically, each maker of an image processing apparatus develops an operation screen by using its own technology without using a general technology such as one for creating a web page. Therefore, with the technology disclosed in Japanese Patent Application Laid-open No. 2006-276989, because all data files are created from the beginning, a professional knowledge is needed for creating an operation screen and the process of creating the operation screen becomes complicated lengthy.

In the technology disclosed in Japanese Patent Application Laid-open No. 2004-265278, a presentation definition defining a layout only shows a layout of data items to be displayed, and it is difficult to create an application screen in which necessary GUI components according to the status of an apparatus are combined.

### SUMMARY OF THE INVENTION

It is an object of the present invention to at least partially solve the problems in the conventional technology.

According to an aspect of the present invention, there is provided an image processing apparatus that performs image processing in accordance with an input operation by a user. The image processing apparatus includes a display unit configured to display an operation screen for a user to perform an input operation to the image processing apparatus; a storing unit configured to store therein a screen element database that stores therein a plurality of screen elements to be arranged on the operation screen and that is capable of storing therein a definition file that defines a display screen; an input unit configured to receive selection of a plurality of screen elements from the screen element database and receive input of component information in which layout information that represents a layout position of a screen element, element definition information that specifies a screen element arranged at the layout position, and screen element information that represents an image of a screen element are correlated with each other, the component information corresponding to each of the screen elements; and a definition-file creating unit configured to create the definition file by combining a plurality of pieces of the component information received by the input unit and configured to store the definition file in the storing unit.

According to another aspect of the present invention, there is provided an image processing method that is performed in an image processing apparatus that performs image processing in accordance with an input operation by a user. The image processing method includes receiving including receiving selection of a plurality of screen elements by an input unit from a screen element database that stores therein a plurality of screen elements to be arranged on an operation screen for a user performing an input operation to the image processing apparatus, and receiving input of component information in which layout information that represents a layout position of a screen element, element definition information that specifies a screen element arranged at the layout position, and screen element information that represents an image of a screen element are correlated with each other, the component information corresponding to each of the screen elements; and creating the definition file by combining a plurality of pieces of the component information received at the receiving.

According to still another aspect of the present invention, there is provided a recording medium that stores therein a computer program which when executed on a computer causes the computer to execute receiving including receiving selection of a plurality of screen elements from a screen element database that stores therein a plurality of screen elements to be arranged on an operation screen for a user performing an input operation to the computer, and receiving input of component information in which layout information that represents a layout position of a screen element, element definition information that specifies a screen element arranged at the layout position, and screen element information that represents an image of a screen element are correlated with each other, the component information corresponding to each of the screen elements; and creating the definition file by combining a plurality of pieces of the component information received at the receiving.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a block diagram of an image processing apparatus according to a first embodiment of the present invention;
Fig. 2 is a basic sequence diagram of a GUI definition file creation;
Fig. 3 is a schematic diagram illustrating an example of a GUI-definition-file creating screen and a GUI-component-information input screen shown in Fig. 1;
Fig. 4 is a schematic diagram of a screen for creating a GUI definition file;
Fig. 5 is a schematic diagram illustrating an example of a description of a source code for screen transition of an application;
Fig. 6 is a schematic diagram illustrating a configuration of a project file that is created automatically;
Fig. 7 is a schematic diagram illustrating a screen for creating the project file;
Fig. 8 is a schematic diagram illustrating an edit screen in the GUI definition file creation;
Fig. 9 is a schematic diagram illustrating a screen for deleting component information;
Fig. 10 is a schematic diagram illustrating a screen for simultaneously deleting a plurality of pieces of component information;
Fig. 11 is a schematic diagram illustrating a screen before inserting the component information;
Fig. 12 is a schematic diagram illustrating a screen after inserting the component information;
Fig. 13 is a schematic diagram illustrating an operation screen for saving and reading out a component information list;
Fig. 14 is a block diagram of an image processing apparatus according to a second embodiment of the present invention;
Fig. 15 is a schematic diagram illustrating a GUI-component reference screen shown in Fig. 14;
Fig. 16 is a reference sequence diagram of the GUI component;
Fig. 17 is a block diagram of an image processing apparatus according to a third embodiment of the present invention;
Fig. 18 is a table illustrating a data structure and a description rule of GUI component information;
Fig. 19 is a determination sequence diagram of the GUI component information;
Fig. 20 is a schematic diagram illustrating an error screen in inputting the GUI component information;
Fig. 21 is a block diagram of an image processing apparatus according to a fourth embodiment of the present invention;
Fig. 22 is a schematic diagram illustrating an example of a command rule shown in Fig. 21;
Fig. 23 is a determination sequence diagram of a command;
Fig. 24 is a schematic diagram illustrating an error screen in a command description;
Fig. 25 is a block diagram of an image processing apparatus according to a fifth embodiment of the present invention;
Fig. 26 is a schematic diagram illustrating a preview screen shown in Fig. 25 of a layout file; and
Fig. 27 is a block diagram of a hardware configuration of the image processing apparatus according to the first to fifth embodiments of the present invention.

### DETAILED DESCRIPTION OF THE PREFERRED EMBODIMENTS

Exemplary embodiments of an image processing apparatus, an image processing method, and a recording medium according to the present invention are described in detail below with reference to the accompanying drawings.

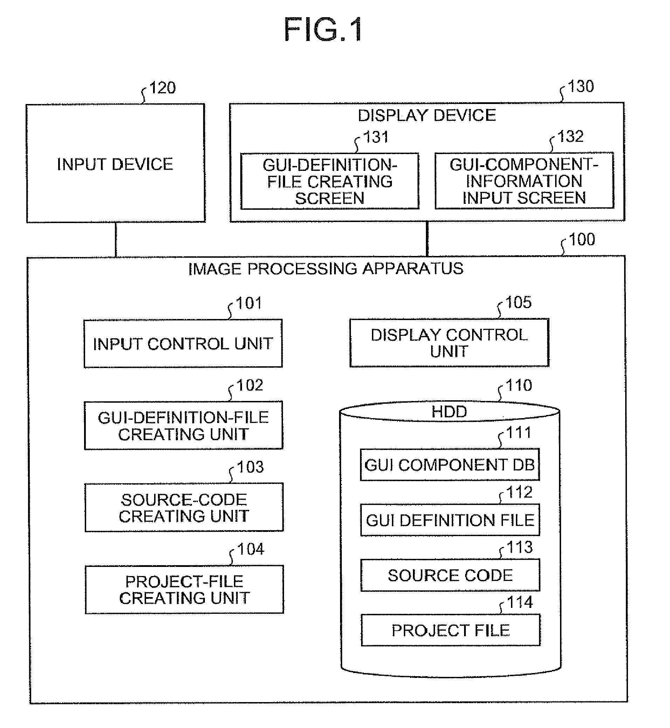

Fig. 1 is a block diagram of an image processing apparatus 100 according to a first embodiment of the present invention. The image processing apparatus 100 includes an input control unit 101, a GUI-definition-file creating unit 102, a source-code creating unit 103, a project-file creating unit 104, a display control unit 105, and a hard disk drive (HDD) 110. The image processing apparatus 100 is connected to an input device 120 and a display device 130.

The input control unit 101 receives input information input by a user by using the input device 120 in an input operation, and stores the input information in the HDD 110 or sends the input information to the display control unit 105.

The display control unit 105 displays a GUI-definition-file creating screen 131, a GUI-component-information input screen 132, and the like. The GUI-definition-file creating screen 131 receives input of information about a component necessary for creating a GUI definition file, and the GUI-component-information input screen 132 receives input of information about GUI component information. Moreover, the display control unit 105 displays a notification of operation success, a confirmation of a delete process execution, and the like in the process of the input operation of the GUI component information.

The HDD 110 stores therein a GUI component database (DB) 111, a GUI definition file 112, a source code 113, and a project file 114. In the GUI component DB 111, a screen element file and a layout data file are stored.

The screen element file is data that represents an image of a screen element displayed on the operation screen. The screen element is classified into a button, a text, and a background and icon. The screen element classified into the button is for issuing an instruction of each process by a user pressing (operating/selecting) it through the input operation from the input device 120. The screen element classified into the text is for sending an explanation or a message to a user with a character or a symbol. As the screen element classified into the background and icon, for example, an image such as a photograph and a computer graphic is used.

The layout data file is data representing a layout position of each screen element to be displayed on the operation screen. The layout position of each screen element is defined by x coordinate value and y coordinate value on a two-dimensional coordinate system on the operation screen.

The GUI definition file 112 stores therein an element definition file. The element definition file is data that specifies a screen element to be arranged to each point written in the layout data file. In the case of the screen element classified into the button, the element definition file specifies a height w and a width h of the button. The element definition file is created for each of different operation screens. The element definition file of the screen element that is displayed commonly among different operation screens is shared.

The source code 113 stores therein a source code created by the source-code creating unit 103. An application logic and a GUI logic that are data representing the operation using the GUI are described as the source code.

The project file 114 stores therein a project file created by the project-file creating unit 104. The project file is a file for collectively managing the source code and the GUI definition file, and includes binary data, reference data, and a build file, which are data converted to be executable in the image processing apparatus 100 by compiling the source code 113.

The GUI-definition-file creating unit 102 combines a plurality of pieces of component information input by a user through the GUI-component-information input screen 132, and refers to the GUI definition file 112, thereby creating the GUI definition file.

The source-code creating unit 103, in accordance with the input information received from the input control unit 101, refers to the GUI component DB 111 and the GUI definition file 112, obtains necessary information corresponding to the input information, and creates the source code that operates a screen element and the image processing apparatus 100 in a correlated manner.

The project-file creating unit 104 creates the project file. For example, in the operation of creating a screen for copying, the project-file creating unit 104 manages a screen definition file for copying and a source code for copying as one project file.

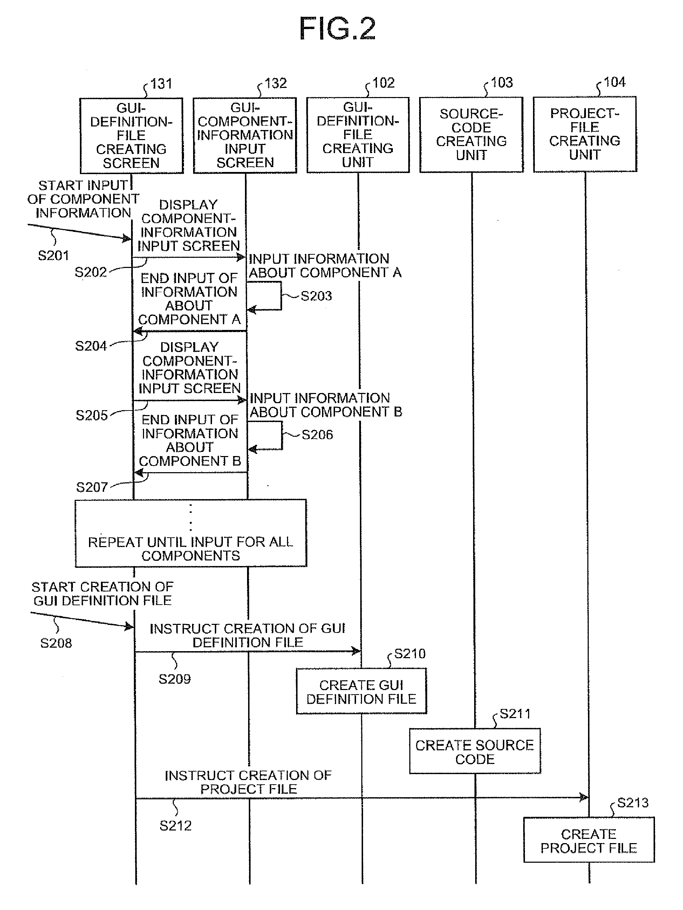

How the GUI definition file is created is explained below. Fig. 2 is a basic sequence diagram of the GUI definition file creation. The input control unit 101 receives selection of a GUI component from the GUI-definition-file creating screen 131 (Step S201). Specifically, a list of the GUI components obtained from the GUI component DB 111 is displayed by the display control unit 105 on the GUI-definition-file creating screen 131, and the input control unit 101 receives selection of a plurality of GUI components from the displayed list.

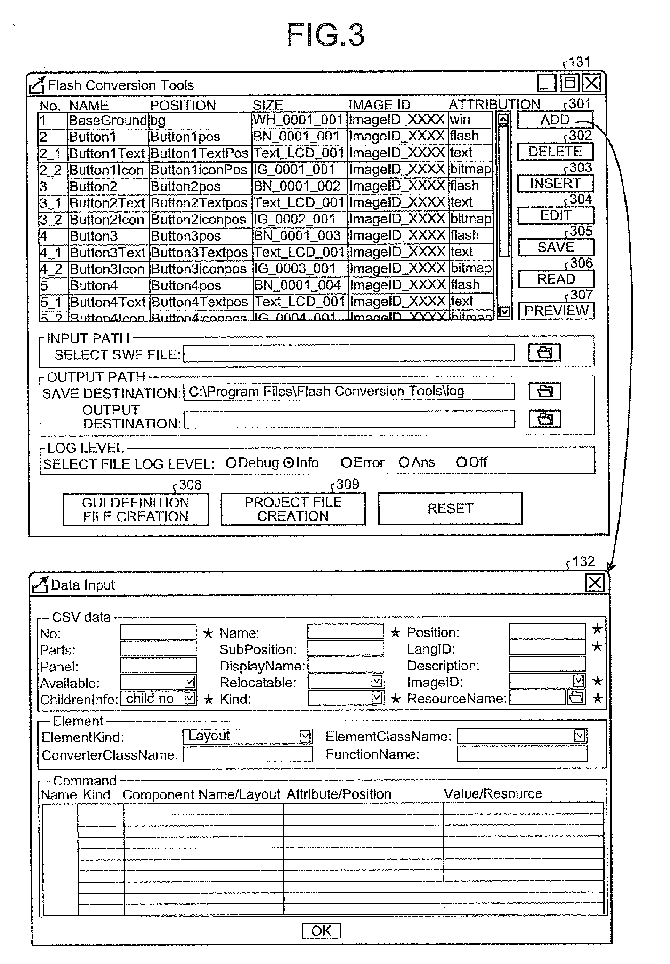

Fig. 3 is a schematic diagram illustrating an example of the GUI-definition-file creating screen 131 and the GUI-component-information input screen 132. When a user presses an add button 301 on the GUI-definition-file creating screen 131 by using the input device 120, the input control unit 101 sends an add instruction to the display control unit 105. The display control unit 105, upon receiving the add instruction, displays the GUI component-information input screen 132 for editing the component information about the GUI components that are selected on the GUI-definition-file creating screen 131 (Step S202).

The user inputs the component information about a component by using the input device 120 (Step S203). When the user inputs all the information necessary for the component A and presses an "OK" button on the GUI-component-information input screen 132, the input of information about the component A ends (Step S204). Then, the screen returns to the GUI-definition-file creating screen 131.

Then, the user presses the add button 301 on the GUI-definition-file creating screen 131 to input the component information about a component B. When the user presses the add button 301 by using the input device 120, the input control unit 101 sends the add instruction to the display control unit 105. The display control unit 105, upon receiving the add instruction, displays a new GUI-component-information input screen 132 (Step S205). The user inputs the component information about the component B by using the input device 120 (Step S206).

When the user inputs all the information necessary for the component B and presses the "OK" button on the newly-displayed GUI-component-information input screen 132, the input of information about the component B ends (Step S207). Then, the screen returns to the GUI-definition-file creating screen 131. A series of the above component-information input process is repeated until the input of the component information about all the components ends.

When the input of the component information about all the components ends, the input control unit 101 starts to create a GUI definition file (Step S208). Specifically, when the user presses a GUI-definition-file creating button 308 shown in Fig. 3 by using the input device 120, the input control unit 101 sends a GUI-definition-file creating instruction to the GUI-definition-file creating unit 102 (Step S209).

When the GUI-definition-file creating unit 102 receives the GUI-definition-file creating instruction from the input control unit 101, the GUI-definition-file creating unit 102 creates a GUI definition file (Step S210). Specifically, the GUI-definition-file creating unit 102, upon receiving the GUI-definition-file creating instruction, refers to the GUI definition file 112 stored in the HDD 110 and creates the GUI definition file corresponding to the input information received from the input control unit 101 in accordance with the input information.

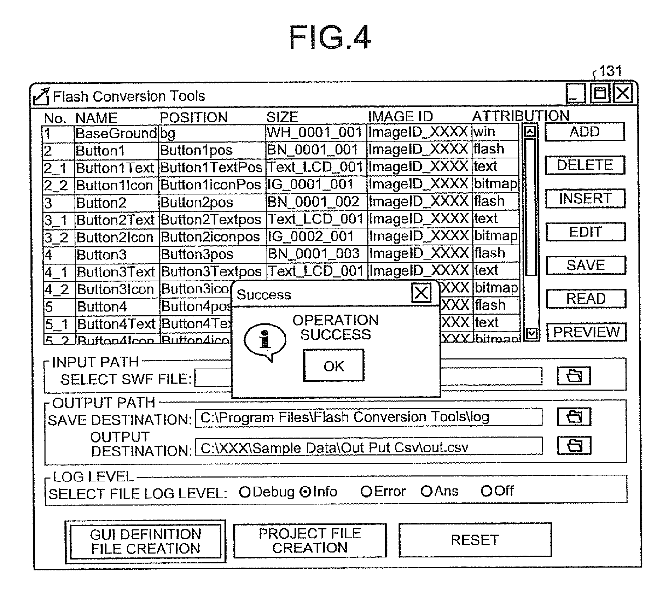

Fig. 4 is a schematic diagram of a screen displaying an operation success when creation of a GUI definition file succeeds. When an "OK" button shown in Fig. 4 is pressed, the GUI-definition-file creating process ends. When the GUI-definition-file creating unit 102 has finished creating the GUI definition file, the GUI-definition-file creating unit 102 sends the created GUI definition file to the source-code creating unit 103.

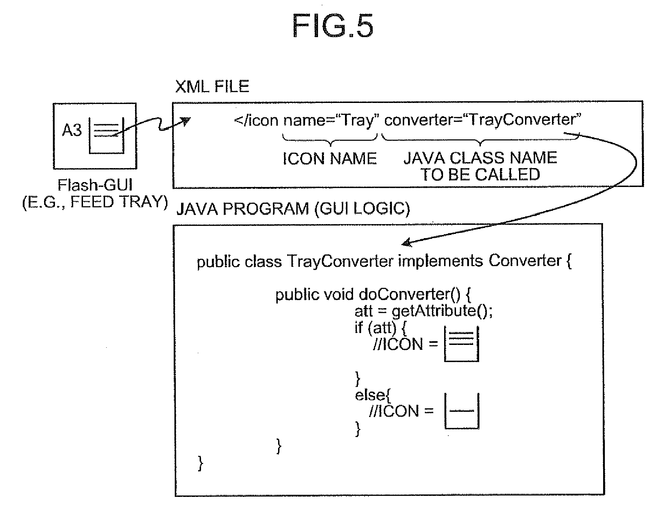

When the source-code creating unit 103 receives the GUI definition file from the GUI-definition-file creating unit 102, the source-code creating unit 103 creates a source code to be executed in the image processing apparatus 100 based on the received GUI definition file (Step S211). Fig. 5 is a schematic diagram illustrating an example of a description of the source code for screen transition of an application. The source-code creating unit 103 automatically creates a frame work class that is determined for each component and needs to be succeeded and a method that the application needs to describe.

In Fig. 5, an extensible markup language (XML) file in which an icon name and a Java (registered trademark) class name to be called are described is correlated to Flash (registered trademark)-GUI representing a A3 sheet tray as the GUI definition file. With this XML file, the layout information about the GUI and a Java (registered trademark) interface are correlated with each other, and a Java (registered trademark) program (GUI logic) is described as a source code. Only the class name is defined in the XML file. When a class predefined in a framework is mounted, the framework appropriately calls a method. An interface indicated as "converter" is provided by a user interface framework Java (registered trademark), and an application developer creates the content (logic) by succeeding the provided interface.

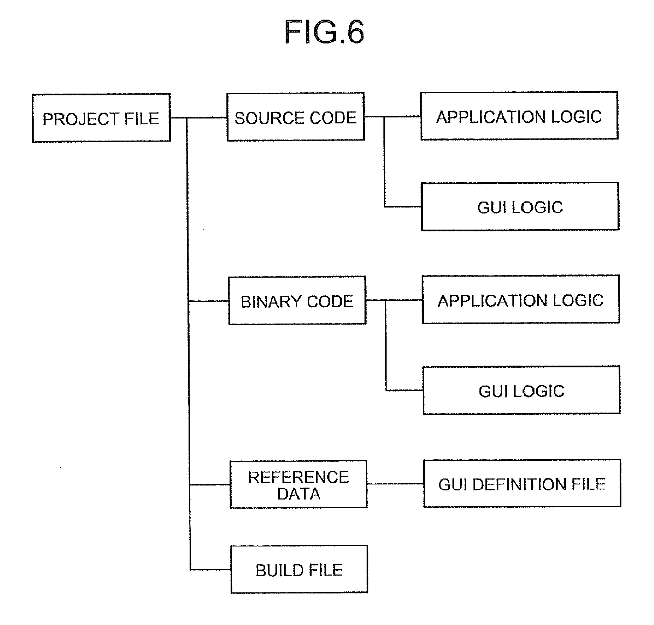

Fig. 6 is a schematic diagram illustrating a configuration of a project file that is created automatically. The project-file creating unit 104 compiles source codes, in which an application logic and a GUI logic that are data representing the operation using the GUI are described, into binary codes. Then, the project-file creating unit 104 obtains reference data from the GUI definition file 112 and creates a build file that is a file necessary for reading into the image processing apparatus.

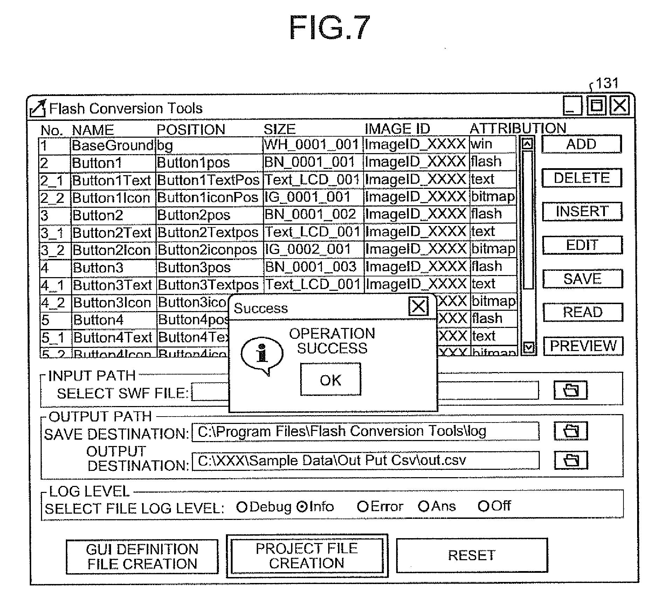

Fig. 7 is a schematic diagram illustrating a screen displaying an operation success when creation of a project file succeeds. When the user presses a project-file creating button shown in Fig. 7, the input control unit 101 sends a project-file creating instruction to the project-file creating unit 104 (Step S212).

When the project-file creating unit 104 receives the project-file creating instruction from the input control unit 101, the project-file creating unit 104 creates a project file (Step S213). Specifically, the user presses a project file creating button 309 shown in Fig. 3. The project-file creating unit 104, upon receiving the project-file creating instruction, creates a project file based on the source code received from the source-code creating unit 103.

When creation of the project file succeeds, a notification of the operation success shown in Fig. 7 is displayed. When the user presses an "OK" button in the notification, a series of the project-file creating process ends.

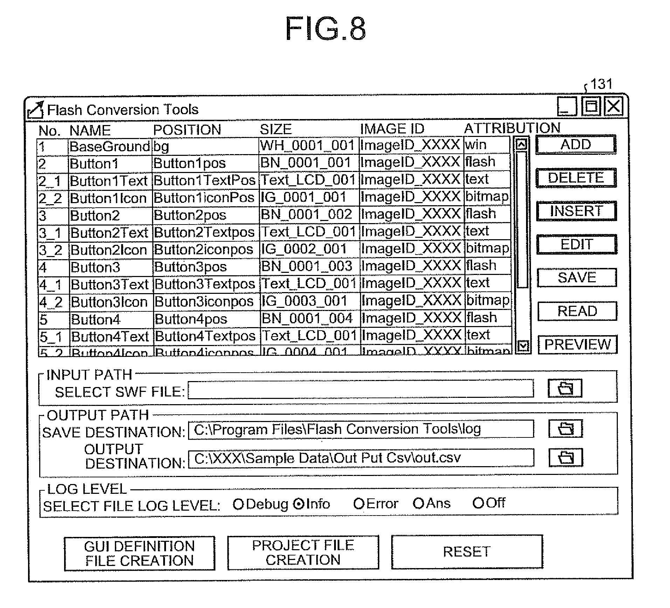

A process of editing the GUI-definition-file creating screen 131 is explained below. Fig. 8 is a schematic diagram illustrating each edit button on the GUI-definition-file creating screen 131. On the GUI-definition-file creating screen 131, an add button, a delete button, an insert button, and an edit button are arranged in order from upper right to lower right. As described above, when the add button is pressed, the GUI-component-information input screen 132 as a screen for inputting component information is displayed.

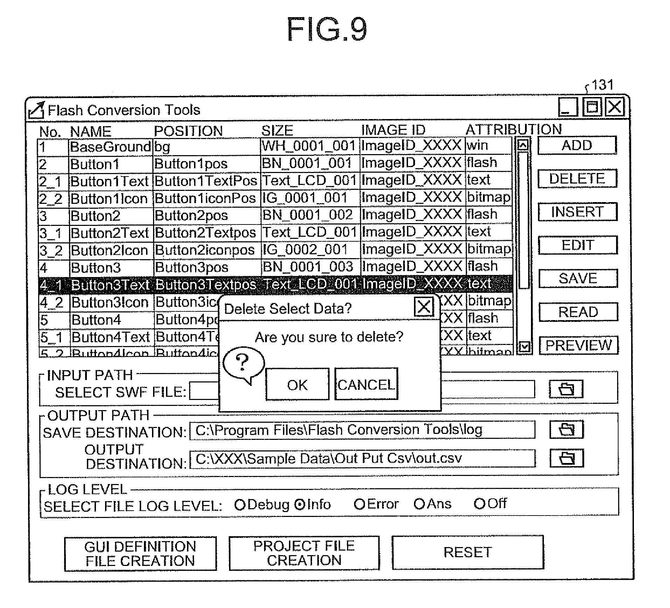

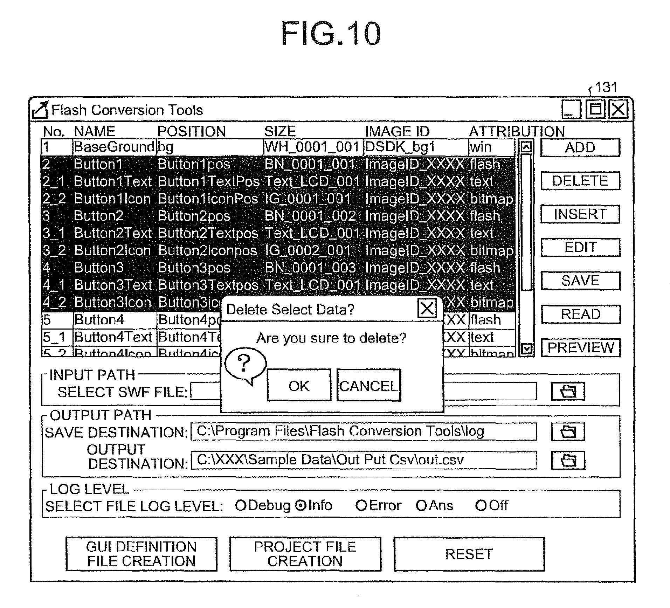

How the input component information is deleted is explained below with reference to Figs. 9 and 10. Fig. 9 is a schematic diagram illustrating a confirmation screen for the process of deleting component information. After specifying one piece of component information, a user presses the delete button. When the user presses the delete button by using the input device 120, the input control unit 101 sends the delete instruction to the display control unit 105. When the display control unit 105 receives the delete instruction from the input control unit 101, the display control unit 105 displays the confirmation screen for performing the process of deleting the specified component information on the GUI-definition-file creating screen 131 shown in Fig. 9.

When the user presses an "OK" button on the confirmation screen, the process is performed of deleting the component information specified by the input control unit 101 from the list of the component information and the GUI component DB 111. On the other hand, when the user presses a "cancel" button on the confirmation screen, the input control unit 101 cancels the specification of the component information to stop the delete process.

Fig. 10 is a schematic diagram illustrating a confirmation screen for simultaneously deleting a plurality of pieces of component information. The user selects a plurality of pieces of component information to be deleted and presses the delete button. When the user presses the delete button by using the input device 120, the display control unit 105 displays the confirmation screen for performing the process of deleting the specified component information on the GUI-definition-file creating screen 131 shown in Fig. 10.

When the user presses an "OK" button on the confirmation screen, the process is performed of deleting the component information specified by the input control unit 101 from the list of the component information and the GUI component DB 111. On the other hand, when the user presses a "cancel" button on the confirmation screen, the input control unit 101 cancels the specification of the component information to stop the delete process.

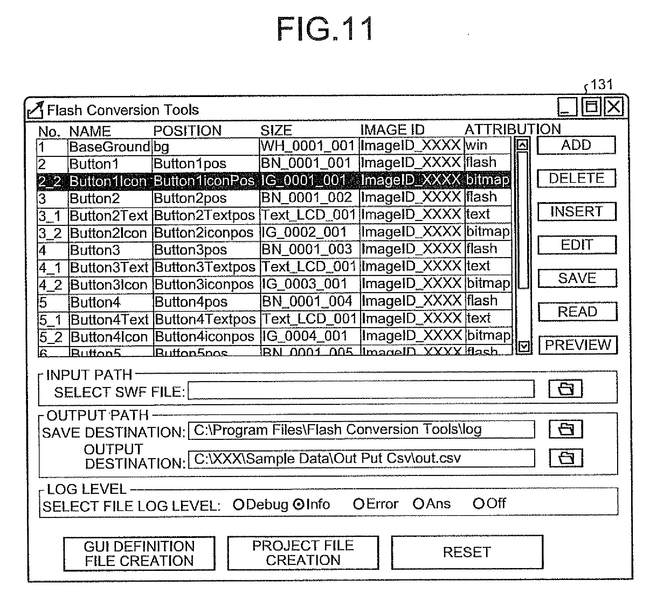

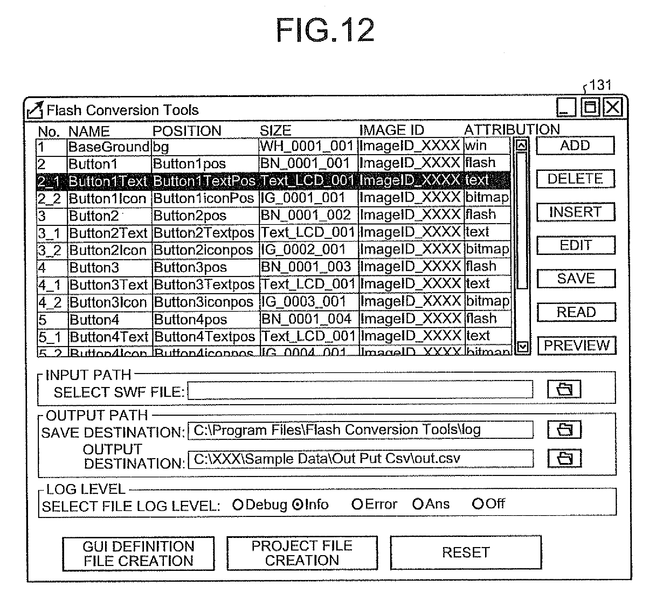

A process of inserting component information is explained below with reference to Figs. 11 and 12. Fig. 11 is a schematic diagram illustrating the GUI-definition-file creating screen 131 before inserting new component information, and Fig. 12 is a schematic diagram illustrating the GUI-definition-file creating screen 131 after inserting component information No. 2-1. For inserting the component information No. 2-1 between component information No. 2 and component information No. 2-2 shown in Fig. 11, the user specifies the component information No. 2-2 to be positioned in a row below the new component information No. 2-1 to be inserted and presses the insert button. When the user presses the insert button, the input control unit 101 inserts the component information No. 2-1 between the component information No. 2 and the component information No. 2-2 shown in Fig. 12 and also into the GUI component DB 111.

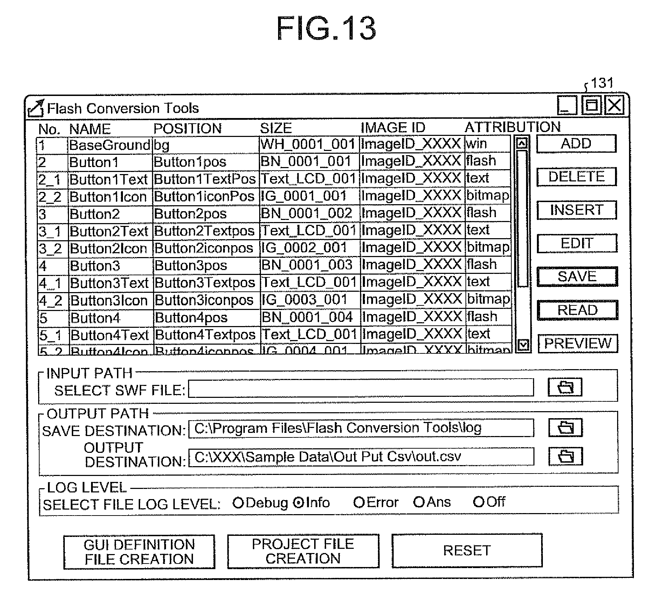

A process of saving and reading out a component information list is explained below. Fig. 13 is a schematic diagram illustrating a save button and a read button. After inputting component information, the user presses the save button to save the edited component information list in the HDD 110. When the user presses the save button by using the input device 120, the input control unit 101 saves the edited component information list in the GUI component DB 111.

Moreover, the user can read out past component information list by pressing the read button. When the user presses the read button by using the input device 120, the input control unit 101 sends a read instruction to the display control unit 105. When the display control unit 105 receives the read instruction, the display control unit 105 reads out the component information list registered in the GUI component DB 111 and displays the component information list on the display device 130.

According to the present embodiment, a GUI definition file is created by combining existing GUI components in the HDD 110, so that an operation screen can be easily customized. Moreover, component information combined on a GUI-definition-file creating screen can be edited appropriately, so that the user can easily edit the component information when needed.

In the image processing apparatus 100 according to the first embodiment, a user inputs GUI component information through the GUI-component-information input screen 132. In a second embodiment, on the contrary, a GUI-component reference screen 1001 is displayed and a user selects and specifies necessary component information from the displayed GUI-component reference screen 1001.

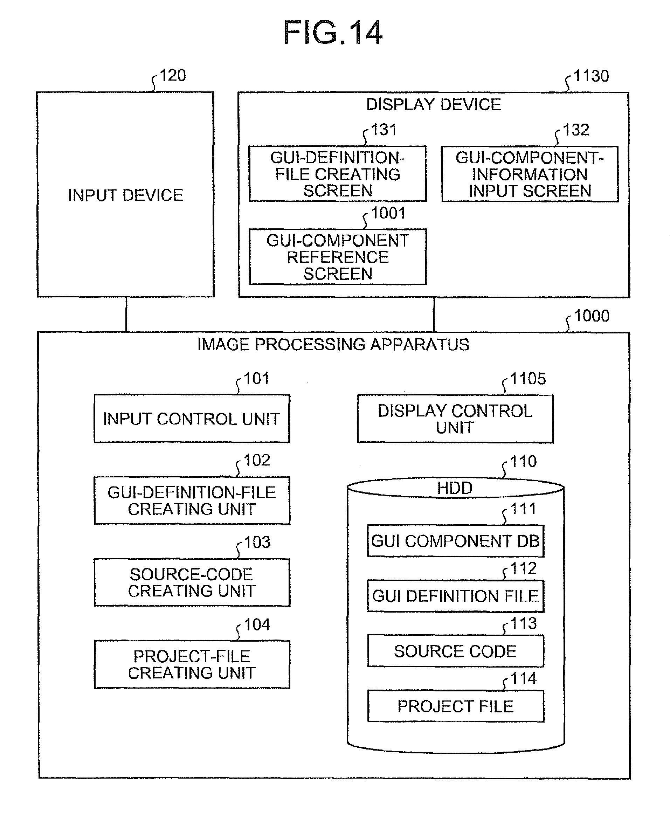

Fig. 14 is a block diagram of an image processing apparatus 1000 according to the second embodiment of the present invention. The image processing apparatus 1000 includes the input control unit 101, the GUI-definition-file creating unit 102, the source-code creating unit 103, the project-file creating unit 104, and the HDD 110 that are included in the image processing apparatus 100 in the first embodiment. Moreover, the image processing apparatus 1000 includes a display control unit 1105. Furthermore, a display device 1130 on which the GUI-component reference screen 1001 is displayed is connected to the image processing apparatus 1000.

The function and the configuration of each of the input control unit 101, the GUI-definition-file creating unit 102, the source-code creating unit 103, the project-file creating unit 104, and the HDD 110 are the same as those in the first embodiment, so that explanation thereof is omitted.

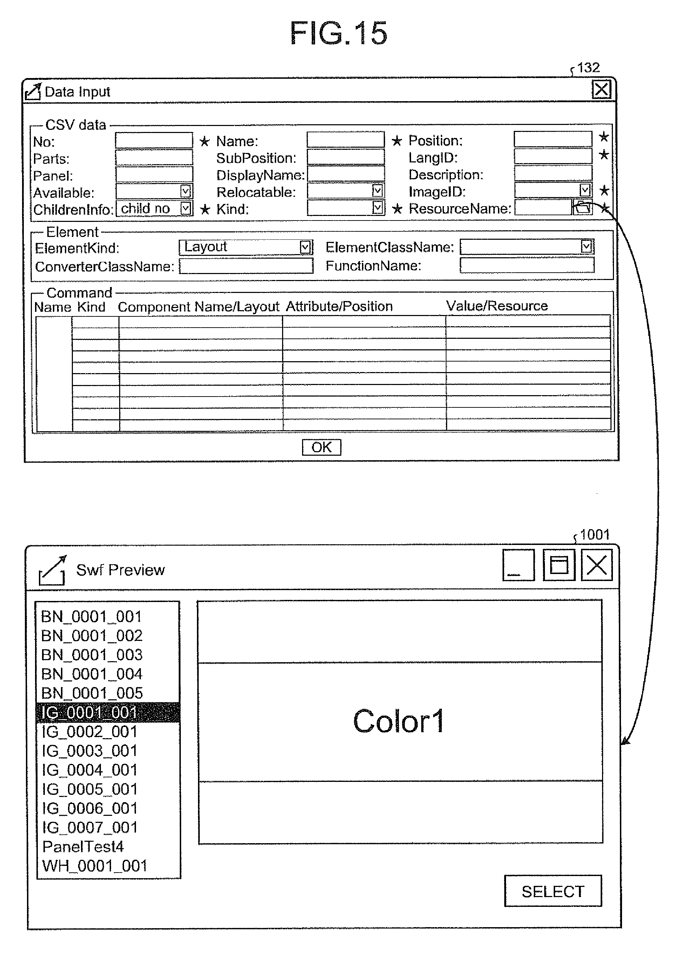

The display control unit 1105 displays the GUI-component reference screen 1001 shown in Fig. 15 on the display device 1130 by receiving a display instruction of the GUI-component reference screen 1001 from the input control unit 101. When the user presses a reference-folder button representing a reference screen in the GUI-component-information input screen 132 shown in the upper side of Fig. 15, the input control unit 101 sends a reference-screen display instruction to the display control unit 1105. The display control unit 1105, upon receiving the reference-screen display instruction, obtains GUT components registered in the GUT component DB 111 and displays the GUI-component reference screen 1001 on the display device 1130 shown in the lower side of Fig. 15.

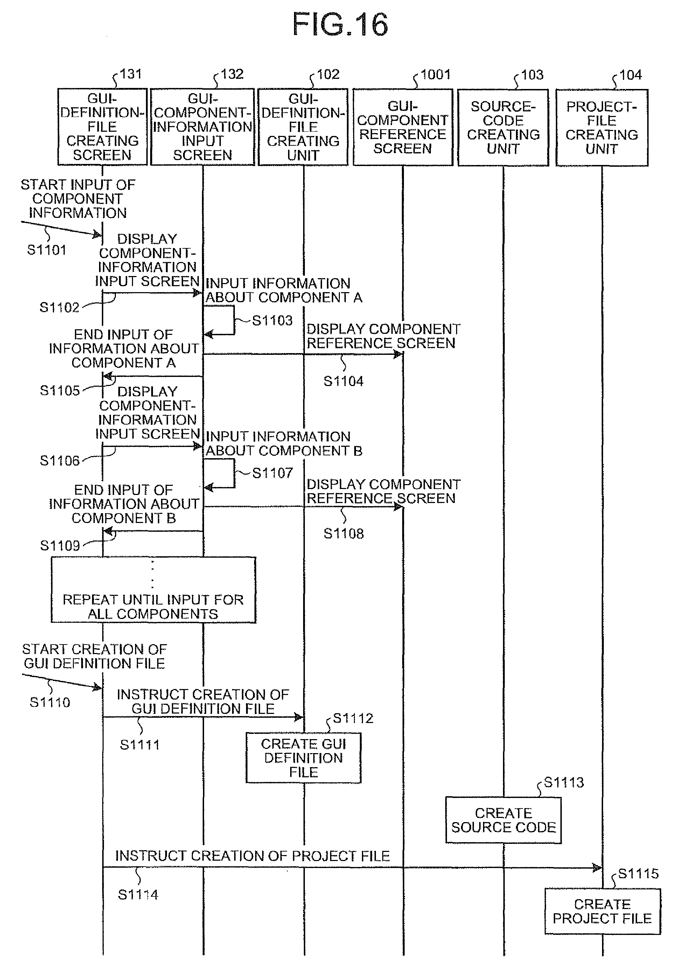

Fig. 16 is a reference sequence diagram of a GUI component. First, the input control unit 101 receives selection of a GUI component from the GUI-definition-file creating screen 131 (Step S1101). Specifically, a list of the GUI components obtained from the GUI component DB 111 is displayed by the display control unit 1105 on the GUI-definition-file creating screen 131, and the input control unit 101 receives selection of a plurality of GUI components from the displayed list.

When the user presses an add button on the GUI-definition-file creating screen 131 by using the input device 120, the input control unit 101 sends an add instruction to the display control unit 1105. The display control unit 1105, upon receiving the add instruction, displays the GUI component-information input screen 132 for editing the component information about the GUI components that are selected on the GUI-definition-file creating screen 131 (Step S1102). When the display control unit 1105 displays the GUI-component-information input screen 132, the user inputs the component information about a component A by using the input device 120 (Step S1103).

The input control unit 101 receives input of information necessary for the component A by the user from the GUI-component-information input screen 132 (Step S203). At this time, when the user presses the reference-folder button, the display control unit 1105 displays the GUI-component reference screen 1001 shown in Fig. 15 on the display device 1130 (Step S1104).

In Fig. 15, a component "Color1" identified from a file name "IG_0001_001" is specified from the GUI-component reference screen 1001. When the input control unit 101 receives the specification of the component "Color1" and input of all the other information necessary for the component A, the input control unit 101 sends the instruction to end the operation to the display control unit 1105. The display control unit 1105, upon receiving the instruction to end the operation, displays a confirmation screen of an operation success on the GUI-component-information input screen 132. When the user presses an "OK" button, the input of information about the component A ends (Step S1105). Then, the screen returns to the GUI-definition-file creating screen 131.

Then, the user presses an add button on the GUI-definition-file creating screen 131 to input the component information about a component B. When the user presses the add button, the input control unit 101 sends the add instruction to the display control unit 1105. The display control unit 1105, upon receiving the add instruction, displays a new GUI-component-information input screen 132 (Step S1106).

The input control unit 101 receives input of the component information about the component B by the user from the input device 120 (Step S1107). In the similar manner to the case of the component A, when the user presses the reference-folder button, the input control unit 101 sends a reference-screen display instruction to the display control unit 1105. The display control unit 1105, upon receiving the reference-screen display instruction, obtains GUI components registered in the GUI component DB 111 and displays the GUI-component reference screen 1001 on the display device 1130 (Step S1108).

When the user inputs all the information necessary for the component B and presses an "OK" button on the GUI-component-information input screen 132, the input of information about the component B ends (Step S1109). Then, the screen returns to the GUI-definition-file creating screen 131. A series of the above component-information input process is repeated until the input of the component information about all components ends.

The process from Step S1110 to Step S1115 are similar to that from Step S208 to Step S213 shown in Fig. 2 in the first embodiment, so that explanation thereof is omitted.

According to the second embodiment, the GUI-component reference screen 1001 is displayed on the display device 1130 and selection of necessary component information is received from a list on the GUI-component reference screen 1001. Therefore, the user is prevented from erroneously inputting component information, enabling to perform a process of inputting the component information more easily and accurately.

In the image processing apparatus 100 according to the first embodiment, a user determines whether there is an error in GUI component information. In a third embodiment, on the contrary, a GUI-component-information determining unit 1201 is provided and it determines whether there is an error in GUI component information based on a GUI-component-information input rule 1211 stored in an HDD 1210.

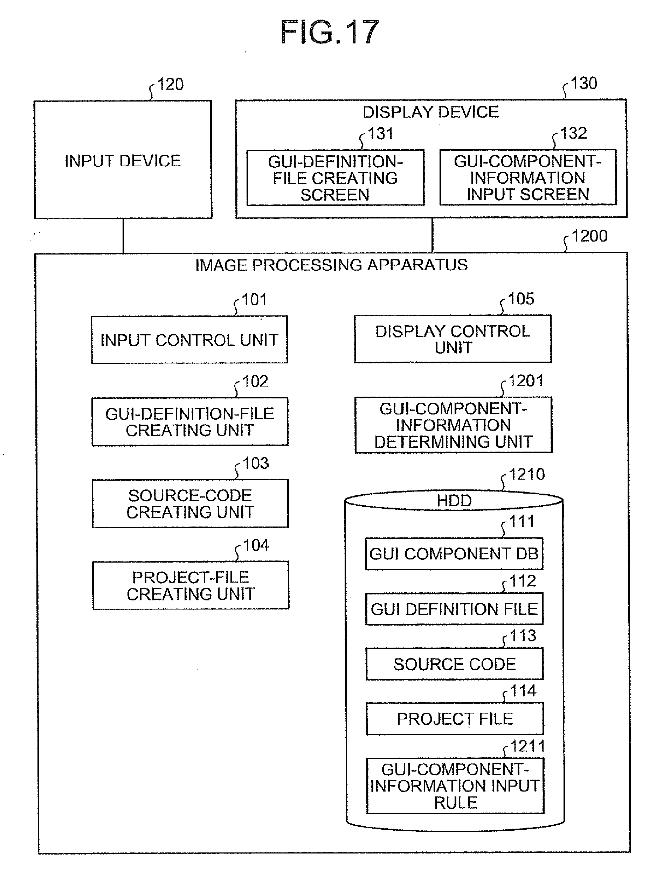

Fig. 17 is a block diagram of an image processing apparatus 1200 according to the third embodiment of the present invention. The image processing apparatus 1200 includes the input control unit 101, the GUI-definition-file creating unit 102, the source-code creating unit 103, the project-file creating unit 104, and the display control unit 105 that are included in the image processing apparatus 100 in the first embodiment. Moreover, the image processing apparatus 1200 includes the GUI-component-information determining unit 1201 and the HDD 1210 that stores therein the GUI-component-information input rule 1211.

The function and the configuration of each of the input control unit 101, the GUI-definition-file creating unit 102, the source-code creating unit 103, the project-file creating unit 104, and the display control unit 105 are the same as those in the first embodiment, so that explanation thereof is omitted.

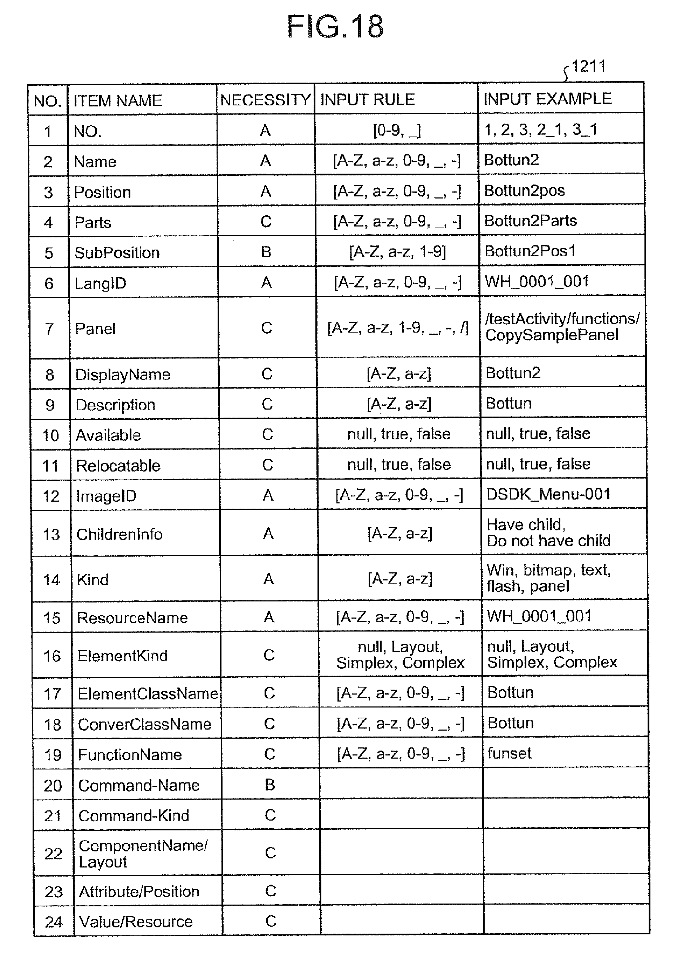

The HDD 1210 stores therein the GUI-component-information input rule 1211. Fig. 18 is a table illustrating an example of the GUI-component-information input rule 1211, in which a number (column "No.") is given for each item in a column "item name", and necessary item information (column "necessity") indicating whether an item is necessary for inputting GUI component information, an input rule, and an input example are registered while being correlated with the item name. In the necessary item information, "A" indicates that input is necessary, "B" indicates that input is not necessary, and "C" indicates that input is necessary in some cases. For example, in the number "1" in the column "NO.", the necessary item information is "A", which indicates that the item name "NO." is necessary input information.

The GUI-component-information determining unit 1201 refers to the GUI-component-information input rule 1211, and determines whether the input information received from the GUI-component-information input screen 132 by the input control unit 101 follows the GUI-component-information input rule 1211.

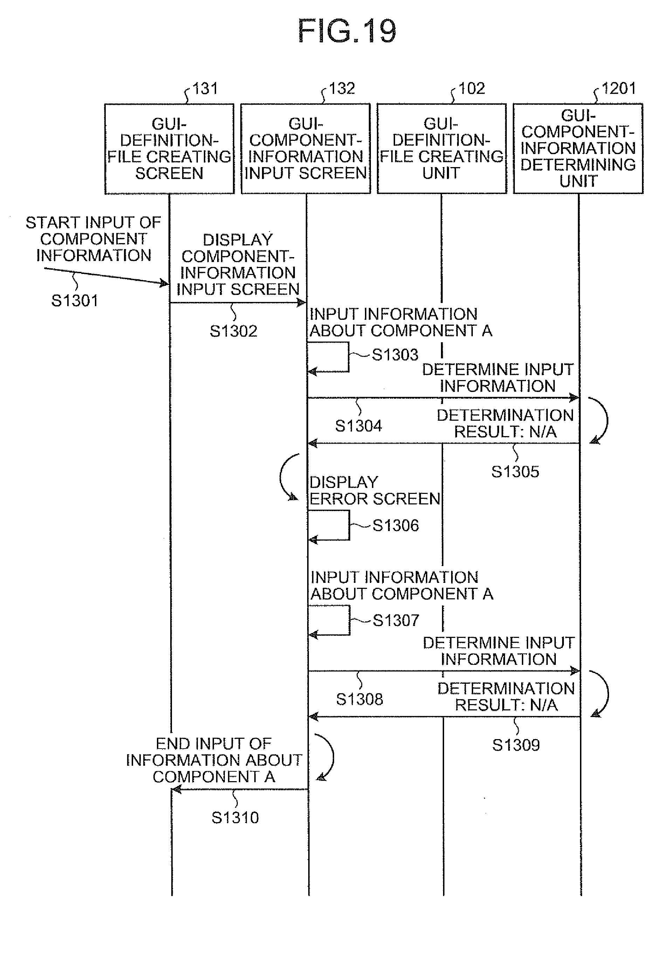

Fig. 19 is a determination sequence diagram of GUI component information. First, the input control unit 101 receives selection of a GUI component from the GUI-definition-file creating screen 131 (Step S1301). Specifically, a list of the GUI components obtained from the GUI component DB 111 is displayed by the display control unit 105 on the GUI-definition-file creating screen 131, and the input control unit 101 receives selection of a plurality of GUI components from the displayed list.

When the user presses an add button on the GUI-definition-file creating screen 131 by using the input device 120, the input control unit 101 sends an add instruction to the display control unit 105. The display control unit 105, upon receiving the add instruction, displays the GUI component-information input screen 132 for editing the component information about the GUI components that are selected on the GUI-definition-file creating screen 131 (Step S1302). The input control unit 101 receives input of the component information about a component A by a user from the input device 120 (Step S1303).

The input control unit 101 receives input of information necessary for the component A by the user from the input device 120. When the input control unit 101 receives all the component information necessary for the component A and the user presses an "OK" button on the GUI-component-information input screen 132, the input control unit 101 sends the input component information to the GUI-component-information determining unit 1201.

When the GUI-component-information determining unit 1201 receives the component information from the input control unit 101, the GUI-component-information determining unit 1201 refers to the GUI-component-information input rule 1211 and determines the component information input to the GUI-component-information input screen 132 (Step S1304).

Specifically, the GUI-component-information determining unit 1201 refers to the GUI-component-information input rule 1211 from the HDD 1210 and determines whether there is an error in the component information by comparing it with the necessary item information, the input rule, and the input example registered in the GUI-component-information input rule 1211.

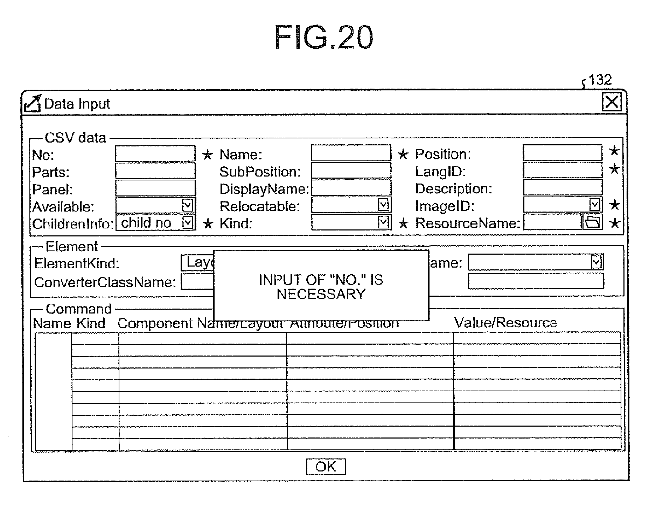

As a result of the determination, if the GUI-component-information determining unit 1201 finds an input error, the GUI-component-information determining unit 1201 sends a result of the determination (determination result) "N/A" to the display control unit 105 (Step S1305). The display control unit 105, upon receiving the determination result "N/A", displays an error screen on the display device 130 (Step S1306). For example, if the content of the input error is a lack of input of a necessary item, the display control unit 105 displays the error screen that indicates the lack of the input of the necessary item as shown in Fig. 20.

When the input control unit 101 receives input of new component information following the display of the error screen (Step S1307), the input control unit 101 sends the new component information to the GUI-component-information determining unit 1201.

When the GUI-component-information determining unit 1201 receives the new component information from the input control unit 101, the GUI-component-information determining unit 1201 determines the component information again (Step S1308). As a result of the determination, if the GUI-component-information determining unit 1201 finds an input error, the GUI-component-information determining unit 1201 sends the determination result "N/A" to the display control unit 105 (Step S1309). On the other hand, if the GUI-component-information determining unit 1201 does not find an input error, the GUI-component-information determining unit 1201 determines that the component information A is correctly input and the input of the component information ends (Step S1310).

According to the third embodiment, the image processing apparatus 1200 includes the GUI-component-information determining unit 1201, and the GUI-component-information determining unit 1201 determines whether component information input by a user follows the GUI-component-information input rule 1211, so that a process of inputting component information can be performed more easily and accurately.

In the image processing apparatus 100 according to the first embodiment, a user determines whether a descriptive content of a command is correct. In a fourth embodiment, on the contrary, a command determining unit 1401 is provided and it determines whether a descriptive content of a command is correct based on a command rule 1411 stored in an HDD 1410.

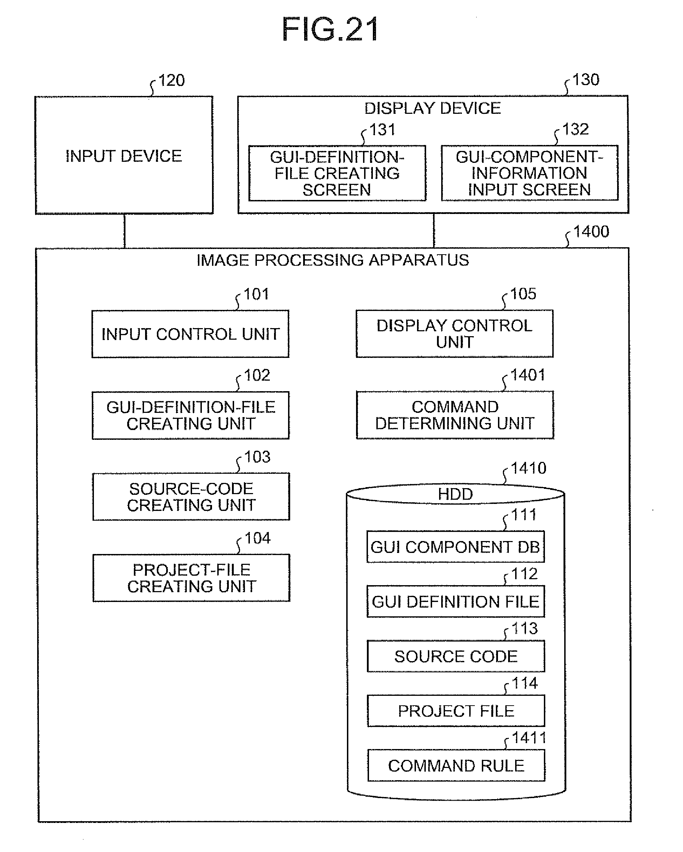

Fig. 21 is a block diagram of an image processing apparatus 1400 according to the fourth embodiment of the present invention. The image processing apparatus 1400 includes the input control unit 101, the GUI-definition-file creating unit 102, the source-code creating unit 103, the project-file creating unit 104, and the display control unit 105 that are included in the image processing apparatus 100 in the first embodiment. Moreover, the image processing apparatus 1400 includes the command determining unit 1401 and the HDD 1410 that stores therein the command rule 1411.

The function and the configuration of each of the input control unit 101, the GUI-definition-file creating unit 102, the source-code creating unit 103, the project-file creating unit 104, and the display control unit 105 are the same as those in the first embodiment, so that explanation thereof is omitted.

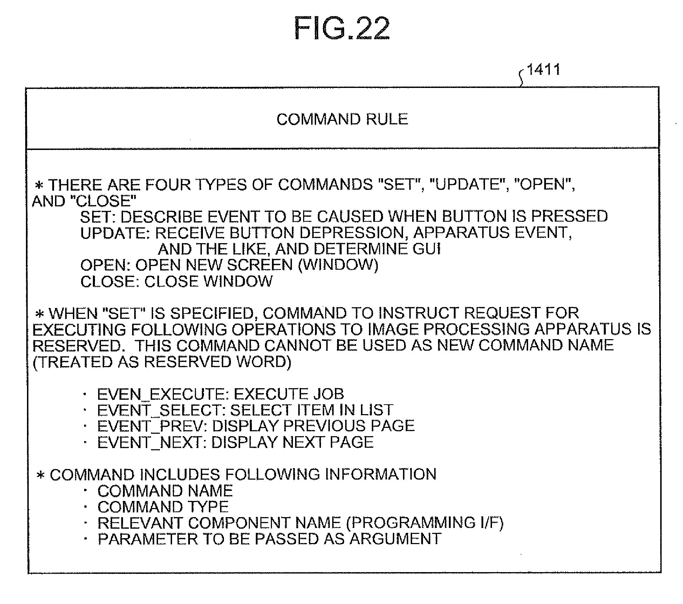

The HDD 1410 stores therein the command rule 1411. Fig. 22 is a schematic diagram illustrating an example of the command rule 1411, in which four types of commands, a certain limit rule, and components of a command are defined. For example, the four types of commands include "set", "update", "open", and "close".

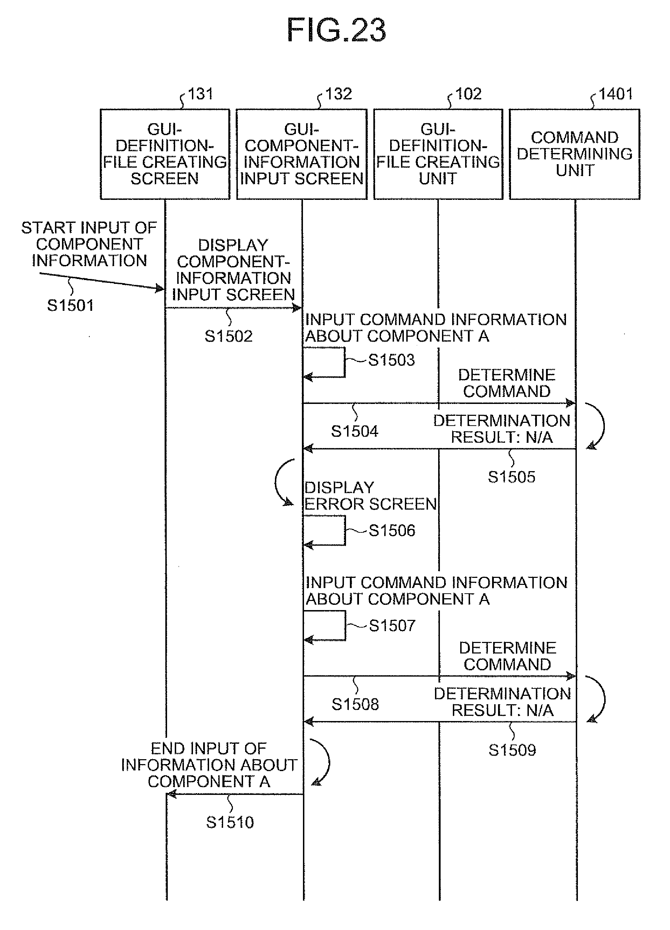

The command determining unit 1401 determines whether the input information received from the GUI-component-information input screen 132 by the input control unit 101 follows the command rule 1411. Fig. 23 is a determination sequence diagram of a command. First, the input control unit 101 receives selection of a GUI component from the GUI-definition-file creating screen 131 (Step S1501). Specifically, a list of the GUI components obtained from the GUI component DB 111 is displayed by the display control unit 105 on the GUI-definition-file creating screen 131, and the input control unit 101 receives selection of a plurality of GUI components from the displayed list.

When the user presses an add button on the GUI-definition-file creating screen 131, the input control unit 101 sends an add instruction to the display control unit 105. The display control unit 105, upon receiving the add instruction, displays the GUI component-information input screen 132 for editing the component information about the GUI components that are selected on the GUI-definition-file creating screen 131 (Step S1502). The input control unit 101 receives input of the command information about a component A by the user from the input device 120 (Step S1503).

When the user presses an "OK" button on the GUI-component-information input screen 132, the input control unit 101 sends the input information to the command determining unit 1401. The command determining unit 1401, upon receiving the input information, determines the command information included in the input information (Step S1504).

Specifically, the command determining unit 1401 refers to the command rule 1411 from the HDD 1410 and determines whether there is an error in the input information by comparing it with the command information registered in the command rule 1411.

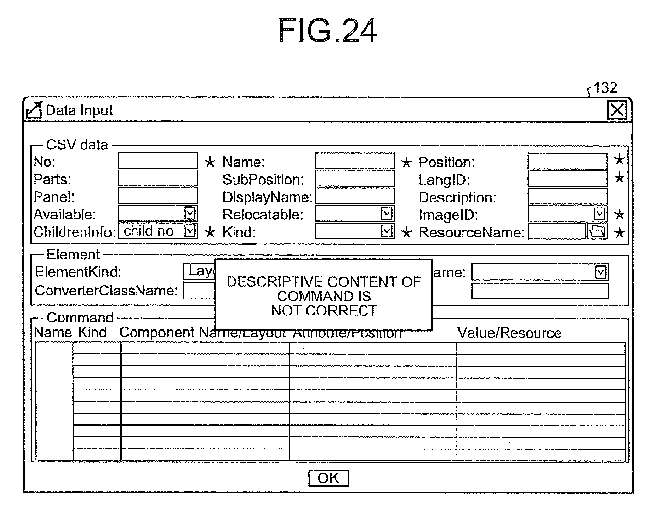

As a result of the determination, if the command determining unit 1401 finds an input error, the command determining unit 1401 sends a result of the determination (determination result) "N/A" to the display control unit 105 (Step S1505). The display control unit 105, upon receiving the determination result "N/A", displays an error screen on the display device 130 (Step S1506). For example, if the content of the input error is a description of the command, the display control unit 105 displays the error screen that indicates that the descriptive content of the command is not correct as shown in Fig. 24.

When the input control unit 101 receives input of new component information following the display of the error screen (Step S1507), the input control unit 101 sends the new component information to the command determining unit 1401.

When the command determining unit 1401 receives the new component information from the input control unit 101, the command determining unit 1401 determines the component information again (Step S1508). As a result of the determination, if the command determining unit 1401 finds an input error, the command determining unit 1401 sends the determination result "N/A" to the display control unit 105 (Step S1509). On the other hand, if the command determining unit 1401 does not find an input error, the GUI-component-information determining unit 1201 determines that the component information A is correctly input and the input of the command information about the component information A ends (Step S1510).

According to the fourth embodiment, the image processing apparatus 1400 includes the command determining unit 1401, and the command determining unit 1401 determines whether command information input by a user follows the command rule 1411, so that a process of inputting command information can be performed more easily and accurately.

In the image processing apparatus 100 according to the first embodiment, when component information is input to the GUI-component-information input screen 132, the process of creating a GUI definition file by the GUT-definition-file creating unit 102 is performed without displaying a confirmation screen. In a fifth embodiment, on the contrary, a preview screen 1601 is provided on a display device 1630, and the process of creating a GUI definition file is performed after a user confirms that a screen arranged based on input component information meets a user's demand.

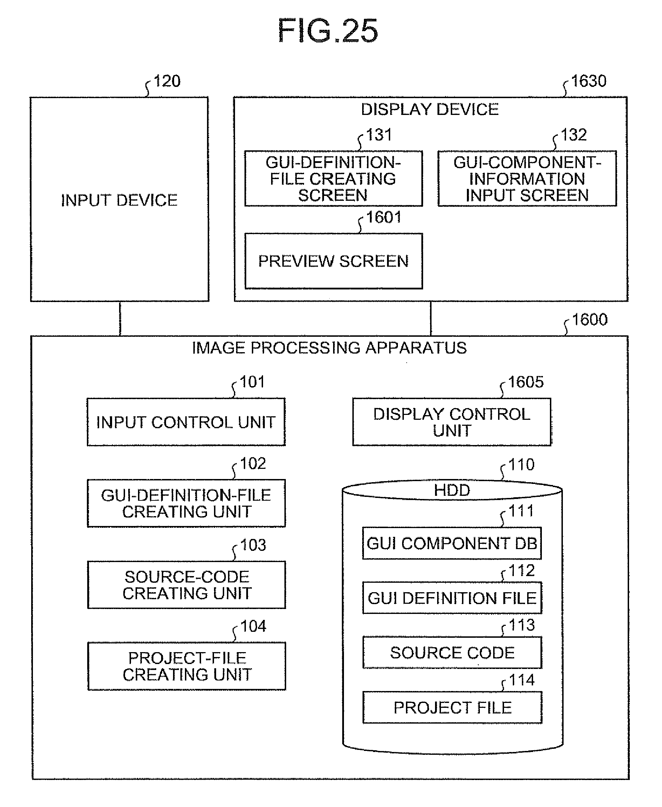

Fig. 25 is a block diagram of an image processing apparatus 1600 according to the fifth embodiment of the present invention. The image processing apparatus 1600 includes the input control unit 101, the GUI-definition-file creating unit 102, the source-code creating unit 103, the project-file creating unit 104, and the HDD 110 that are included in the image processing apparatus 100 in the first embodiment. Moreover, the image processing apparatus 1600 includes a display control unit 1605. The display device 1630 on which the preview screen 1601 is displayed is connected to the image processing apparatus 1600.

The function and the configuration of each of the input control unit 101, the GUI-definition-file creating unit 102, the source-code creating unit 103, the project-file creating unit 104, and the HDD 110 are the same as those in the first embodiment, so that explanation thereof is omitted.

When the user presses a preview button on the GUI-definition-file creating screen 131 by using the input device 120, the input control unit 101 sends a preview display instruction to the display control unit 1605. The display control unit 1605, upon receiving the preview display instruction from the input control unit 101, displays the preview screen 1601 on the display device 1630.

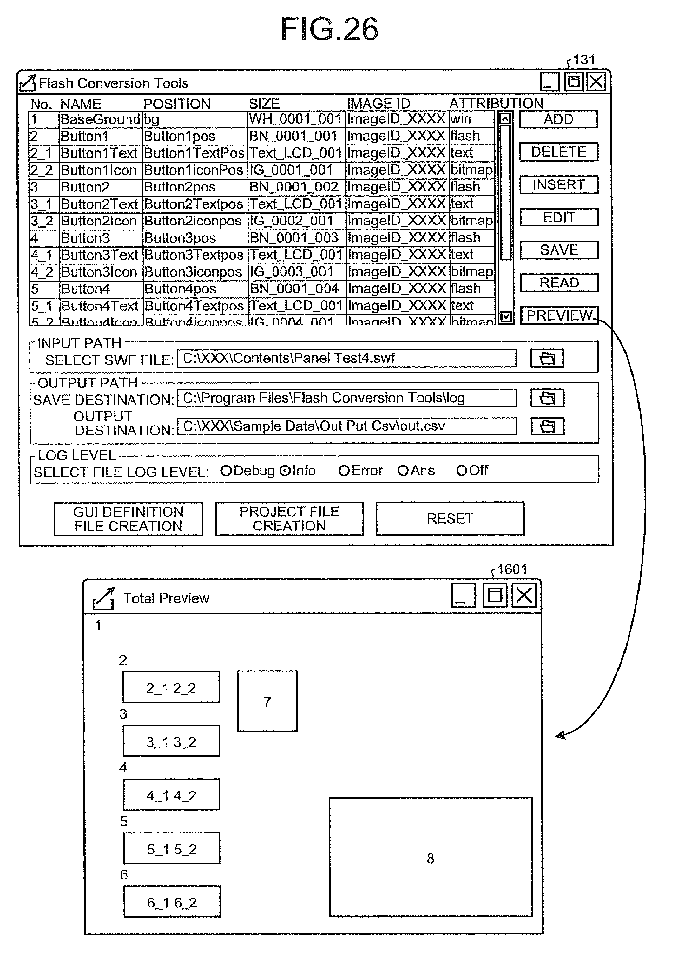

Fig. 26 is a schematic diagram illustrating an example of the preview screen 1601. When the user presses the preview button (see the upper side of Fig. 26), the input control unit 101 sends a preview display instruction to the display control unit 1605. The display control unit 1605, upon receiving the preview display instruction, displays the preview screen 1601 shown in the lower side of Fig. 26 on the display device 1630.

According to the fifth embodiment, the image processing apparatus 1600 includes the display control unit 1605, and the display control unit 1605 displays the preview screen 1601 on the display device 1630 by receiving a preview display instruction from the input control unit 101, so that a user can confirm a layout of component information more easily and accurately.

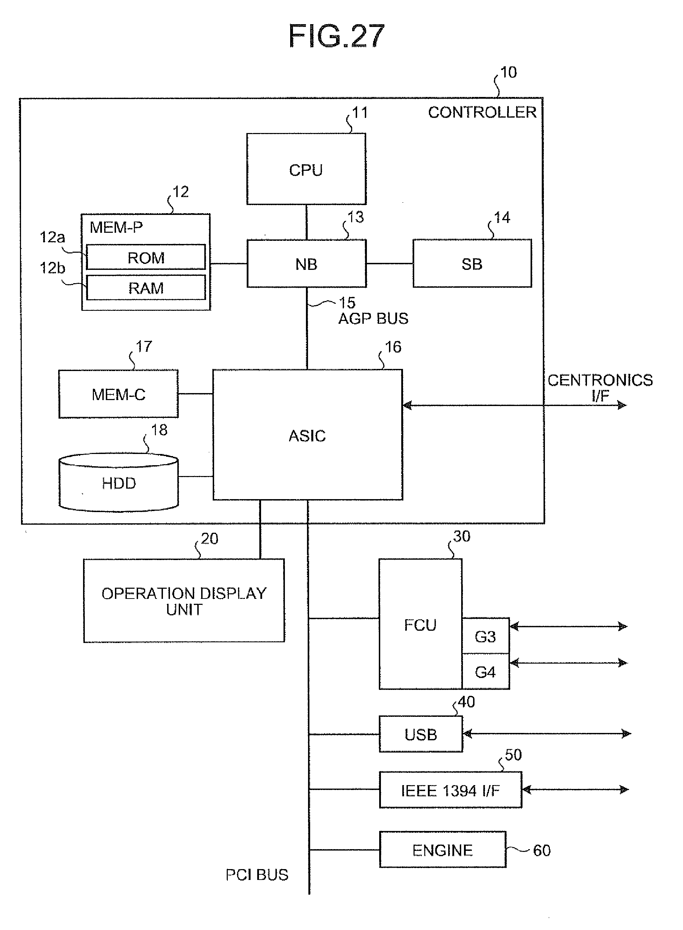

Fig. 27 is a block diagram of a hardware configuration of the image processing apparatus according to the first to fifth embodiments of the present invention. As shown in Fig. 27, each of the image processing apparatuses 100, 1000, 1200, 1400, and 1600 is configured such that a controller 10 and an engine unit (Engine) 60 are connected via a peripheral component interface (PCI) bus. The controller 10 controls the entire image processing apparatuses 100, 1000, 1200, 1400, and 1600, image formation, communication, and input from an operation unit (not shown). The engine unit 60 is a printer engine or the like connectable to the PCI bus. For example, the engine unit 60 is a black and white plotter, a one-drum color plotter, a four-drum color plotter, a scanner, or a facsimile unit. The engine unit 60 includes, in addition to the engine part such as a plotter, an image processing unit for performing the error diffusion, the y conversion, and the like.

The controller 10 includes a CPU 11, a north bridge (NB) 13, a system memory (MEM-P) 12, a south bridge (SB) 14, a local memory (MEM-C) 17, an application specific integrated circuit (ASIC) 16, and an HDD 18. The NB 13 and the ASIC 16 are connected via an accelerated graphics port (AGP) bus 15. The MEM-P 12 includes a ROM 12a and a RAM 12b.

The CPU 11 controls the entire image processing apparatuses 100, 1000, 1200, 1400, and 1600. The CPU 11 includes a chip set including the MEM-P 12, the NB 13, and the SB 14, through which the CPU 11 is connected to other devices.

The NB 13 is a bridge for connecting the CPU 11 to the MEM-P 12, the SB 14, and the AGP bus 15, and includes a memory controller that controls read and write operations to the MEM-P 12, a PCI master, and an AGP target.

The MEM-P 12 is a system memory that is used as a memory for storing computer programs and data, a memory for loading computer programs and data, a memory for drawing in a printer, or the like, and includes the ROM 12a and the RAM 12b. The ROM 12a is a read-only memory used as a memory for storing computer programs and data. The RAM 12b is a writable and readable memory used as a memory for loading computer programs and data, a memory for drawing in a printer, or the like.

The SB 14 is a bridge for connecting the NB 13, a PCI device, and a peripheral device. The SB 14 is connected to the NB 13 via the PCI bus. A network I/F (not shown) or the like is also connected to the PCI bus.

The ASIC 16 is an integrated circuit (IC) for image processing including an image-processing hardware element, and functions as a bridge that connects the AGP bus 15, the PCI bus, the HDD 18, and the MEM-C 17 to each other. The ASIC 16 includes a PCI target, an AGP master, an arbiter (ARB) forming a core of the ASIC 16, a memory controller that controls the MEM-C 17, a plurality of direct memory access controllers (DMACs) that rotate image data by a hardware logic and the like, and a PCI unit that performs data transfer with the engine unit 60 via the PCI bus. A facsimile control unit (FCU) 30, a universal serial bus (USB) 40, and an institute of electrical and electronics engineers (IEEE) 1394 I/F 50 are connected to the ASIC 16 via the PCI bus. An operation display unit 20 is directly connected to the ASIC 16.

The MEM-C 17 is a local memory used as a copy image buffer and a code buffer. The HDD 18 is a storage that stores therein image data, computer programs, font data, and forms.

The AGP bus 15 is a bus I/F for a graphics accelerator card proposed to speed up a graphic processing. By making a direct access to the MEM-P 12 at high throughput, a graphics accelerator card speeds up.

The image processing apparatus according to the above embodiments can be applied to a copier, a scanner, a facsimile machine, a printer, or a multifunction product (MFP) that includes at least two of a copier function, a printer function, a scanner function, and a facsimile function. Alternatively, the image processing apparatus can be applied to an information processing apparatus such as a personal computer (PC).

According to an aspect of the present invention, a definition file is created by combining GUI components, so that an operation screen can be customized easily.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An image processing apparatus that performs image processing in accordance with an input operation by a user, the image processing apparatus comprising:
a display unit (130) configured to display an operation screen for a user to perform an input operation to the image processing apparatus;
a storing unit (110) configured to store therein a screen element database (111) that stores therein a plurality of screen elements to be arranged on the operation screen and that is capable of storing therein a definition file that defines a display screen;
an input unit (101) configured to receive selection of a plurality of screen elements from the screen element database and receive input of component information in which layout information that represents a layout position of a screen element, element definition information that specifies a screen element arranged at the layout position, and screen element information that represents an image of a screen element are correlated with each other, the component information corresponding to each of the screen elements; and
a definition-file creating unit (102) configured to create the definition file by combining a plurality of pieces of the component information received by the input unit (101) and configured to store the definition file in the storing unit (110).

2. The image processing apparatus according to claim 1, further comprising a display control unit (105) configured to display a definition-file creating screen (131) through which the user inputs necessary information for creating the definition file, and a component-information input screen (132) through which the user inputs the component information that is used for creating the definition file, on the display unit (130), wherein
the input unit (101) receives the necessary information input through the definition-file creating screen (131) and the component information input through the component-information input screen (132), and
the definition-file creating unit (102) creates the definition file based on the necessary information input through the definition-file creating screen (131) and the component information input through the component-information input screen (132).

3. The image processing apparatus according to claim 2, wherein the display control unit (105) displays information that input is necessary in a necessary item from among items input for the component information displayed on the component-information input screen (132), and when the component information is not input from the input unit (101) in the necessary item, displays information that the component information is not input in the necessary item on the display unit (130).

4. The image processing apparatus according to claim 2, wherein the display control unit (105) displays a preview image (307) that receives specification of displaying on the display unit (130) a layout of the component information, which is input on the component-information input screen (132), on the operation screen, and upon receiving the specification of the preview image from the input unit (101), displays the layout on the display unit (130).

5. The image processing apparatus according to claim 2, wherein display control unit (105) displays edit images (301 to 304) that receive specification of input, delete, edit, and insert of the component information, which is input on the component-information input screen (132), on the definition-file creating screen (131), and upon receiving the specification of any one of the edit images from the input unit (101), performs a process specified to the component-information input (132) screen and updates the definition-file creating screen (131).

6. The image processing apparatus according to claim 2, wherein
the display control unit (105) displays on the display unit (130) a save image (305) that receives specification of storing the component information, which is input on the component-information input screen (132) from the input unit (101), in the storing unit (110), and
the storing unit (110) stores therein the component information upon receiving the specification of the save image from the input unit (101).

7. The image processing apparatus according to claim 2, wherein the display control unit (105) displays on the display unit (130) a read image (306) that receives specification of reading out the component information stored in the storing unit (110), and upon receiving the specification of the read image from the input unit (101), reads out the component information from the storing unit (110) and displays the component information on the display unit (130).

8. The image processing apparatus according to claim 1 or 2, further comprising a source-code creating unit (103) that creates a source code that operates the screen element and the image processing apparatus in a correlated manner based on the component information input from the input unit (101).

9. The image processing apparatus according to claim 8, further comprising a project-file creating unit (104) that creates a project file that collectively manages the source code created by the source-code creating unit (103) and the definition file stored in the storing unit (110).

10. The image processing apparatus according to claim 2, wherein the display control unit (105), upon receiving selection of the screen element from the input unit (101), displays a reference screen (1001) that displays an image corresponding to the screen element that is selected on the display unit (130).

11. The image processing apparatus according to any one of claims 2 to 10, further comprising a component-information determining unit (1201) that determines whether the component information input on the component-information input screen (132) is input following a correct input rule (1211), wherein
the display control unit (105), upon determining by the component-information determining unit (1201) that the component information is not input following the correct input rule, displays a notification indicating that the component information is against the input rule on the display unit (130).

12. The image processing apparatus according to any one of claims 2 to 11, further comprising a command description unit that describes process information performed when the input unit (101) receives specification of the screen element displayed on the operation screen, on the component-information input screen (132).

13. The image processing apparatus according to claim 12, further comprising a command determining unit (1401) that determines whether the process information described by the command description unit is input following a correct input rule (1411), wherein
the display control unit (105), upon determining by the command description unit that the process information is not input following the input rule, displays a notification indicating that the component information is against the input rule on the display unit (130).

14. An image processing method that is performed in an image processing apparatus that performs image processing in accordance with an input operation by a user, the image processing method comprising:
receiving including
receiving selection of a plurality of screen elements by an input unit from a screen element database that stores therein a plurality of screen elements to be arranged on an operation screen for a user performing an input operation to the image processing apparatus, and
receiving input of component information in which layout information that represents a layout position of a screen element, element definition information that specifies a screen element arranged at the layout position, and screen element information that represents an image of a screen element are correlated with each other, the component information corresponding to each of the screen elements; and
creating the definition file by combining a plurality of pieces of the component information received at the receiving.

15. A recording medium that stores therein a computer program which when executed on a computer causes the computer to execute:
receiving including
receiving selection of a plurality of screen elements from a screen element database that stores therein a plurality of screen elements to be arranged on an operation screen for a user performing an input operation to the computer, and
receiving input of component information in which layout information that represents a layout position of a screen element, element definition information that specifies a screen element arranged at the layout position, and screen element information that represents an image of a screen element are correlated with each other, the component information corresponding to each of the screen elements; and
creating the definition file by combining a plurality of pieces of the component information received at the receiving.
